# EUROPEAN PATENT APPLICATION

(11) **EP 4 084 206 A1**
(43) Date of publication of application: **02.11.2022**
(21) Application number: 21877836.3
(22) Date of filing: 23.08.2021
(51) Int. Cl.: H01M 50/502, H01M 50/543, H01M 50/20

(54) **BATTERY MODULE, AND BATTERY PACK AND VEHICLE COMPRISING BATTERY MODULE**

(30) Priority: 06.10.2020 KR 20200129001
(71) Applicant: LG Energy Solution, Ltd., Seoul 07335 (KR)
(72) Inventor: PARK, Jhin-Ha, Daejeon 34122 (KR); KIM, Kyung-Woo, Daejeon 34122 (KR); MUN, Jeong-O, Daejeon 34122 (KR); PARK, Jin-Yong, Daejeon 34122 (KR); CHI, Ho-June, Daejeon 34122 (KR); JIN, Hee-Jun, Daejeon 34122 (KR)
(74) Representative: Hoffmann Eitle
(86) International application number: PCT/KR2021/011226
(87) International publication number: WO 2022/075584

(57) **Abstract**

Provided are a battery module, a battery pack and a vehicle including the same. The battery module includes a battery cell stack in which a plurality of battery cells are stacked; a bus bar to which electrode leads respectively provided in the plurality of battery cells are coupled; and a cover in which the battery cell stack is accommodated, wherein the bus bar is provided such that at least a part of the bus bar is in contact with upper surfaces of the electrode leads.

## Description

### TECHNICAL FIELD

The present application claims priority to Korean Patent Application No. 10-2020-0129001 filed on October 6, 2020 in the Republic of Korea, the disclosure of which is incorporated herein by reference.

The present disclosure relates to a battery module, a battery pack, and a vehicle including the same, and more particularly, to a battery module capable of preventing pressure from being applied to an electrode lead, a battery pack, and a vehicle including the same.

### BACKGROUND ART

As technology development of and demand for mobile devices increase, the demand for secondary batteries as an energy source is rapidly increasing. Although nickel cadmium batteries or hydrogen ion batteries have been used as secondary batteries of the related art, because the batteries have almost no memory effect compared to nickel-based secondary batteries, recently, lithium secondary batteries that are freely charged and discharged, have very low self-discharge rate, and have high energy density have been widely used.

Such a lithium secondary battery mainly uses lithium-based oxides and carbon materials as positive electrode active materials and negative electrode active materials, respectively. The lithium secondary battery includes an electrode assembly in which a positive electrode plate and a negative electrode plate on which a positive electrode active material and a negative electrode active material are respectively coated are arranged with a separator interposed therebetween, and a sheath material, that is, a battery case, that seals and accommodates the assembly together with an electrolyte solution.

The lithium secondary battery includes a positive electrode, a negative electrode, a separator interposed therebetween, and an electrolyte, and includes a lithium ion battery (LIB), a polymer lithium ion battery (PLIB), etc. according to which positive electrode active material and negative electrode active material are used. In general, the electrodes of the lithium secondary batteries are formed by coating a positive electrode active material or a negative electrode active material on a current collector such as an aluminum or copper sheet, a mesh, a film, or a foil, and then drying the positive electrode active material or the negative electrode active material. In addition, various types of secondary batteries have a cover capable of protecting a plurality of battery cells, and include a plurality of battery modules in which the plurality of battery cells are stacked and inserted into the cover, and a battery pack including the plurality of battery modules.

The battery cells may be electrically connected to each other through a bus bar that is a conductor. In general, a positive electrode lead is manufactured of an aluminum material, a negative electrode lead is manufactured of a copper material, and the bus bar is also manufactured of a copper material.

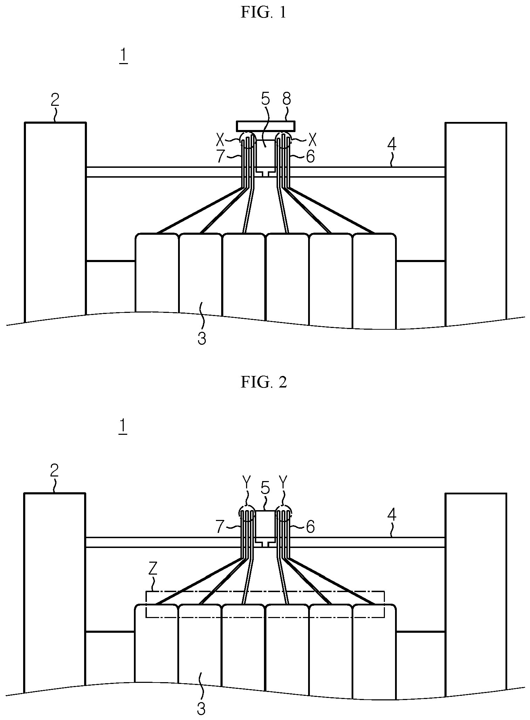

FIG. 1 schematically illustrates a state before a step of electrode leads of a plurality of battery cells is corrected in a battery module of the related art, and FIG. 2 schematically illustrates a state after the step of the electrode leads of the plurality of battery cells is corrected by using a step correction jig in FIG. 1.

Referring to FIG. 1, a battery module 1 includes a cover 2, a plurality of battery cells 3, a bus bar frame 4, and a bus bar 5, and the battery cell 3 includes a positive electrode lead 6 and a negative electrode lead 7.

As shown in FIG. 1, when the electrode leads 6 and 7 of each of the plurality of battery cells 3 protrude through the bus bar frame 4, the step (see X in FIG. 1) between the plurality of electrode leads 6 and 7 occurs.

However, in the case of the battery module 1 of the related art, in order to weld the electrode leads 6 and 7 and the bus bar 5 to each other, by correcting the step X formed between the electrode leads 6 and 7 using a step correction jig 8, the electrode leads 6 and 7 are adjusted to have the same height as shown in Y in FIG. 2.

However, a process of correcting the step X formed between the electrode leads 6 and 7 using the step correcting jig 8 is to press the electrode leads 6 and 7 with the step correcting jig 8 and forcibly remove a height difference. According to this, because prestress is generated in a coupling portion (see Z in FIG. 2) between the battery cell 3 and the electrode leads 6 and 7, there is a problem in that damage occurs in the coupling portion between the battery cell 3 and the electrode leads 6 and 7.

In addition, the bus bar 5 is joined to the electrode leads 6 and 7 through welding and fixed to the bus bar frame 4. Here, when gas is generated inside the battery cell 3 and a swelling phenomenon in which the battery cell 3 swells occurs, pressure is also applied to the electrode leads 6 and 7 and the bus bar 5. Because the bus bar 5 is fixed to the bus bar frame 4, there is a problem in that the electrode leads 6 and 7 and the bus bar 5 are broken.

### DISCLOSURE

### Technical Problem

The present disclosure is designed to solve the problems of the related art, and therefore the present disclosure is directed to providing a battery module capable of preventing prestress from being generated in a coupling portion of a battery cell and an electrode lead, a battery pack and a vehicle including the same.

The present disclosure is also directed to providing a battery module capable of preventing pressure from being applied between an electrode lead and a bus bar when a swelling phenomenon of a battery cell occurs, and a battery pack and a vehicle including the same.

### Technical Solution

In one aspect of the present disclosure, there is provided a battery module including a battery cell stack in which a plurality of battery cells are stacked; a bus bar to which electrode leads respectively provided in the plurality of battery cells are coupled; and a cover in which the battery cell stack is accommodated, wherein the bus bar is provided such that at least a part of the bus bar is in contact with upper surfaces of the electrode leads.

The bus bar may include a first member in contact with side surfaces of the electrode leads; and a second member in contact with upper surfaces of the electrode leads.

The first member may be disposed between a positive electrode lead and a negative electrode lead, and the second member may extend from the first member toward each of the positive electrode lead and the negative electrode lead.

The bus bar may be formed in a "T" shape as a whole.

The second member of the bus bar may be bonded by laser welding while being placed on upper portions of the electrode leads.

The positive electrode lead may be manufactured of an aluminum material, and the negative electrode lead may be manufactured of a copper material, and the bus bar may be manufactured of an aluminum material, melted during the laser welding, and bonded to an electrode lead of a copper material that is a different material.

A support frame in which an insertion opening may be formed so that the electrode leads protrude is provided on the cover, and the bus bar may be disposed such that a buffer space is formed between the bus bar and the support frame.

The buffer space may be formed in a lower side of the bus bar to buffer a tensile force generated in the battery cell.

In another aspect of the present disclosure, there is provided a battery pack including the battery module described above and a vehicle including the battery module.

### Advantageous Effects

The embodiments of the present disclosure may prevent prestress from being generated in a coupling portion of a battery cell and an electrode lead.

The embodiments of the present disclosure may prevent pressure from being applied between an electrode lead and a bus bar when a swelling phenomenon of a battery cell occurs.

### DESCRIPTION OF DRAWINGS

FIG. 1 schematically illustrates a state before a step of electrode leads of a plurality of battery cells is corrected in a battery module of the related art.
FIG. 2 schematically illustrates a state after the step of the electrode leads of the plurality of battery cells is corrected by using a step correction jig in FIG. 1.
FIG. 3 is an overall perspective view of a bus bar and a bus bar frame in a battery module according to an embodiment of the present disclosure.
FIG. 4 is a cross-sectional view taken along line A-A' of FIG. 3.
FIG. 5 is a cross-sectional view illustrating a state where a step occurs between electrodes leads in FIG. 4.
FIG. 6 schematically illustrates a state before battery cells are expanded by cell swelling in the battery module according to an embodiment of the present disclosure.
FIG. 7 schematically illustrates a state after the battery cells are expanded by cell swelling in the battery module according to an embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each element or a specific portion constituting the element is exaggerated, omitted, or schematically illustrated for convenience and clarity of description. Accordingly, the size of each element does not fully reflect the actual size. If it is determined that a detailed description of a related known function or configuration may unnecessarily obscure the gist of the present disclosure, such description will be omitted.

As used herein, the term 'couple' or 'connect' includes not only a case where one member is directly coupled or directly connected to another member, but also a case where one member is indirectly coupled or indirectly connected to another member through a joint member.

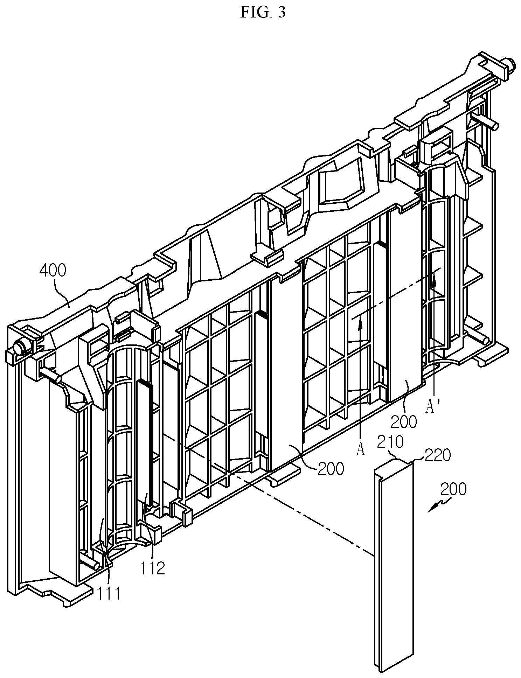

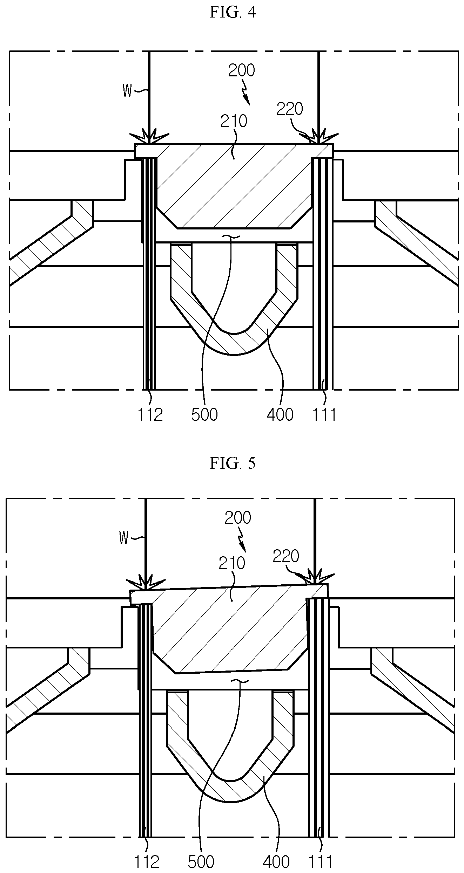

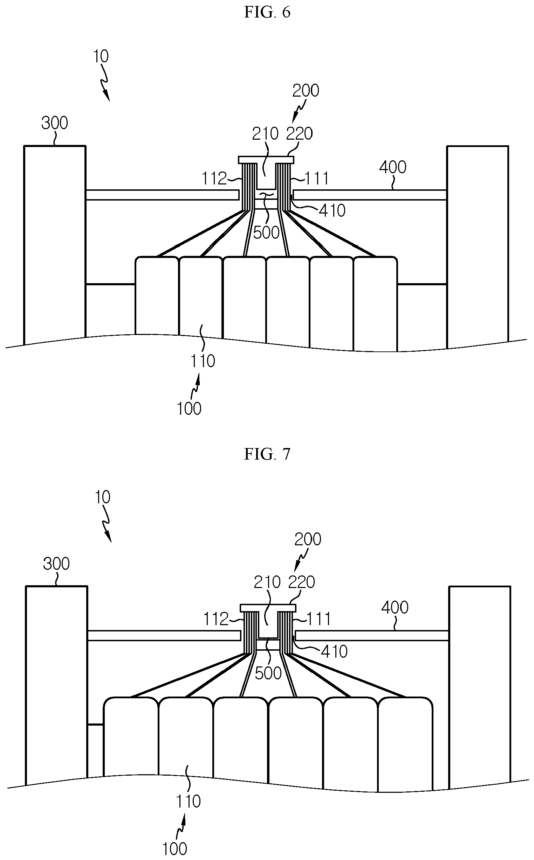

FIG. 3 is an overall perspective view of a bus bar and a bus bar frame in a battery module according to an embodiment of the present disclosure, FIG. 4 is a cross-sectional view taken along line A-A' of FIG. 3, FIG. 5 is a cross-sectional view illustrating a state where a step occurs between electrodes leads in FIG. 4, FIG. 6 schematically illustrates a state before battery cells are expanded by cell swelling in the battery module according to an embodiment of the present disclosure, and FIG. 7 schematically illustrates a state after the battery cells are expanded by cell swelling in the battery module according to an embodiment of the present disclosure.

Referring to the drawings, a battery module 10 according to an embodiment of the present disclosure includes a battery cell stack 100, a bus bar 200, and a cover 300.

Referring to FIGS. 6 and 7, a plurality of battery cells 110 in which electrode leads 111 and 112 are provided are stacked in the battery cell stack 100. The electrode leads 111 and 112 provided in the battery cell 110 are a kind of terminal exposed to the outside and are connected to an external device, and may use a conductive material.

The electrode leads 111 and 112 may include a positive electrode lead 111 and a negative electrode lead 112. The positive electrode lead 111 and the negative electrode lead 112 may be disposed in opposite directions with respect to the longitudinal direction of the battery cell 110, or the positive electrode lead 111 and the negative electrode lead 112 may be located in the same direction with respect to the longitudinal direction of the battery cell 110.

The positive electrode lead 111 and the negative electrode lead 112 may be made of various materials. For example, the positive electrode lead 111 may be manufactured of an aluminum material, and the negative electrode lead 112 may be manufactured of a copper material.

The electrode leads 111 and 112 may be electrically coupled to the bus bar 200. The battery cell 110 may have a structure in which a plurality of unit cells or a plurality of bi-cells are stacked according to the capacity, wherein positive electrode plate-separator-negative electrode plate are sequentially arranged in a unit cell, and positive electrode plate-separator-negative electrode plate-separator-positive electrode plate-separator-negative electrode plate are sequentially arranged in a bi-cell.

The battery cell stack 100 may be configured such that the plurality of battery cells 110 are stacked on each other. Here, the battery cells 110 may have various structures, and the plurality of battery cells 110 may be stacked in various ways.

A plurality of cartridges (not shown) respectively accommodating the battery cells 110 may be provided on the battery cell stack 100. Each cartridge (not shown) may be manufactured by injection molding of plastic, and the plurality of cartridges (not shown) in which an accommodating unit capable of accommodating the battery cell 110 is formed may be stacked.

A connector element or a terminal element may be provided on a cartridge assembly in which the plurality of cartridges (not shown) are stacked. The connector element may include, for example, various types of electrical connection components or connection members for connection to a battery management system (BMS, not shown) capable of providing data on the voltage or temperature of the battery cell 110, etc.

In addition, the terminal element includes a positive electrode terminal and a negative electrode terminal as a main terminal connected to the battery cell 110, and a terminal bolt is provided on the terminal element to be electrically connected to the outside. Meanwhile, the battery cell 110 may have various shapes.

Referring to FIGS. 6 and 7, the battery cell stack 100 or a cartridge assembly in which the battery cell stack 100 is accommodated is accommodated in the cover 300. For example, the cover 300 may be provided to surround the battery cell stack 100.

The cover 300 surrounds the battery cell stack 100 or all of a plurality of cartridge assemblies, thereby protecting the battery cell stack 100 or the cartridge assemblies from external vibration or impact.

The cover 300 may be formed in a shape corresponding to the shape of the battery cell stack 100 or the cartridge assembly. For example, when the battery cell stack 100 or the cartridge assembly is provided in a hexahedral shape, the cover 300 may also be provided in the hexahedral shape to correspond thereto.

The cover 300 may be manufactured by, for example, bending a plate of a metal material, or may be manufactured by plastic injection mold. Also, the cover 300 may be manufactured integrally or may be manufactured separately.

A penetration unit (not shown) through which the connector element or the terminal element described above may be exposed to the outside may be formed in the cover 300. That is, the connector element or the terminal element may be electrically connected to a predetermined external component or member, and the penetration unit may be formed in the cover 300 so that the electrical connection is not obstructed by the cover 300.

The cover 300 may include an upper cover, a lower cover, and a side cover, but is not limited thereto.

A support frame 400 in which an insertion opening 410 is formed so that the electrode leads 111 and 112 protrude may be provided on the cover 300. That is, the electrode leads 111 and 112 may protrude to the outside of the cover 300 through the insertion opening 410 formed in the support frame 400, and may be bonded to the bus bar 200 on a protruding part of the electrode leads 111 and 112.

Referring to FIGS. 4 and 5, the bus bar 200 is coupled to the electrode leads 111 and 112 respectively provided in the plurality of battery cells 110, and electrically connects the respective electrode leads 111 and 112 to each other. The bus bar 200 is provided such that at least a part of the bus bar 200 is in contact with upper surfaces of the electrode leads 111 and 112. That is, the bus bar 200 is welded while being placed on the upper surfaces of the electrode leads 111 and 112 (see W in FIGS. 4 and 5).

The bus bar 200 may include a first member 210 and a second member 220. The first member 210 may be in contact with side surfaces of the electrode leads 111 and 112, and the second member 220 may be in contact with upper surfaces of the electrode leads 111 and 112.

Here, the first member 210 may be disposed between the positive electrode lead 111 and the negative electrode lead 112, and the second member 220 may be formed to extend from the first member 210 to each of the positive electrode lead 111 and the negative electrode lead 112. That is, the bus bar 200 may be formed in a shape similar to a "T" shape as a whole.

When the bus bar 200 is formed in the shape similar to the "T" shape as a whole, the bus bar 200 may be configured such that a horizontal portion, that is, the second member 220, is in contact with the upper surfaces of the positive electrode lead 111 and the negative electrode lead 112, and a vertical portion, that is, the first member 210, is in contact with e side surfaces of the positive electrode lead 111 and the negative electrode lead 112.

Here, as described above, when the positive electrode lead 111 is manufactured of an aluminum material, and the negative electrode lead 112 is manufactured of a copper material, the bus bar 200 may be manufactured of an aluminum material.

In addition, the second member 220 of the bus bar 200 may be bonded by welding, for example, laser welding, while being placed on upper portions of the electrode leads 111 and 112. Here, during laser welding, the bus bar 200 of the aluminum material may be configured to be melted and bonded to an electrode lead of the copper material that is a different material.

In this regard, it is usually relatively easy to bond the same type of materials by welding, but welding of different materials is not so easy. Among two materials, one material having relatively low reflectivity is melted and bonded to the other material having high reflectivity.

That is, because aluminum has relatively low reflectance compared to copper among copper and aluminum, welding of copper and aluminum melts aluminum having relatively low reflectance and bonds the melted aluminum to copper.

Referring to FIGS. 1 and 2, in the case of the battery module 1 of the related art, the bus bar 5 is formed to have a rectangular cross-section and is disposed between the positive electrode lead 6 and the negative electrode lead 7. In addition, the positive electrode lead 6 is manufactured of an aluminum material, the negative electrode lead 7 is manufactured of a copper material, and the bus bar 5 is manufactured of a copper material.

That is, in the case of the battery module 1 of the related art, it is possible to easily bond the bus bar 5 of the copper material and the negative electrode lead 7 of the copper material that are the same material, but in the case of bonding the positive electrode lead 6 and the bus bar 5, the positive electrode lead 6 of the aluminum material is melted and bonded to the bus bar 5 of the copper material.

In the case of the battery module 1 of the related art, welding was performed in the same manner as described above due to structural problems.

However, in the case of the battery module 10 according to an embodiment of the present disclosure, because the bus bar 200 is manufactured of an aluminum material, and the second member 220 of the bus bar 200 is placed on upper portions of the electrode leads, the second member 220 of the bus bar 200 of the aluminum material may be melted and bonded to both the positive electrode lead 111 and the negative electrode lead 112.

That is, the bus bar 200 may be manufactured of the aluminum material due to a structural change of the bus bar 200, and thus the bus bar 200 may be melted to bond the bus bar 200 and the electrode leads. Because the cost of an aluminum electrode lead is lower than that of a copper electrode lead, there is an effect of reducing the cost thereby.

Here, unlike the battery module 1 of the related art, the battery module 10 according to an embodiment of the present disclosure does not require a jig for correcting the step between the electrode leads 111 and 112.

As described above, in the case of the battery module 1 of the related art, because the electrode leads 6 and 7 are adjusted to have the same height by correcting the step X formed between the electrode leads 6 and 7 using the step correction jig 8, prestress is generated in a coupling portion (see Z in FIG. 2) between the battery cell 3 and the electrode leads 6 and 7, which causes a problem that damage occurs in the coupling portion between the battery cell 3 and the electrode leads 6 and 7.

However, in the case of the battery module 10 according to an embodiment of the present disclosure, while the step between the electrode leads 111 and 112 is left as it is as shown in FIG. 5 without correcting the step between the electrode leads 111 and 112, when the bus bar 200 is placed on the upper portions of the electrode leads 111 and 112, because welding is performed while the bus bar 200 is placed on the upper portions of the electrode leads 111 and 112, no prestress is generated in the coupling portion of the battery cell 100 and the electrode leads 111 and 112, and thus the problem of damage to the coupling portion is prevented.

As in FIG. 4, even when no step occurs between the electrode leads 111 and 112, welding may be performed as it is.

Meanwhile, referring to FIGS. 4 and 5, the bus bar 200 may be disposed such that a buffer space 500 is formed between the bus bar 200 and the support frame 400. Here, the buffer space 500 may be formed in a lower side of the bus bar 200 so as to buffer the tensile force generated in the battery cell 110.

As described above, in the case of the battery module 1 of the related art, because the bus bar 5 is bonded to the electrode leads 6 and 7 through welding and fixed to the bus bar 200 and the frame 4, when the swelling phenomenon occurs in the battery cell 3, there is a problem in that the electrode leads 6 and 7 and the bus bar 5 are broken.

However, in the case of the battery module 10 according to an embodiment of the present disclosure, even when the swelling phenomenon occurs in the battery cell 110, the bus bar 200 moves to the buffer space 500, thereby preventing the electrode leads 111 and 112 and the bus bar 200 from being broken.

For example, as shown in FIG. 6, before the swelling phenomenon occurs in the battery cell 110, a sufficient space, that is, the buffer space 500, is formed between the bus bar 200 and the support frame 400. In addition, when the swelling phenomenon occurs in the battery cell 110 and the tensile force is applied to the electrode leads 111 and 112, the bus bar 200 moves to the buffer space 500 as shown in FIG. 7, thereby reducing pressure applied to the leads 111 and 112 and the bus bar 200, and preventing the electrode leads 111 and 112 and the bus bar 200 from being broken.

Hereinafter, the operation and effect of the battery module 10 according to an embodiment of the present disclosure will be described with reference to the drawings.

The bus bar 200 of the battery module 10 according to an embodiment of the present disclosure may be manufactured of an aluminum material and bonded to both the positive electrode lead 111 and the negative electrode leads 112 through, for example, laser welding, etc. while being placed on upper portions of the electrode leads.

That is, the bus bar 200 of an aluminum material is melted and bonded to the positive electrode lead 111 and the negative electrode lead 112.

At this time, the bus bar 200 may be disposed such that the buffer space 500 is formed in a lower side of the bus bar 200 and between the bus bar 200 and the support frame 400 for buffering the tensile force generated in the battery cell 110.

Through such a configuration, prestress is not generated in the coupling portion between the battery cell 110 and the electrode leads 111 and 112, thereby preventing damage to the coupling portion, and also, when the swelling phenomenon occurs in the battery cell 110 and the tensile force is applied to the electrode leads 111 and 112, the bus bar 200 moves to the buffer space 500, thereby reducing pressure applied to the leads 111 and 112 and the bus bar 200, and preventing the electrode leads 111 and 112 and the bus bar 200 from being broken.

Meanwhile, a battery pack (not shown) according to an embodiment of the present disclosure may include one or more battery modules 10 according to an embodiment of the present disclosure as described above. In addition, the battery pack (not shown) may further include a case accommodating the battery module 10, and various devices controlling the charging and discharging of the battery module 10, such as a BMS, a current sensor, a fuse, etc., in addition to the battery module 10.

Meanwhile, a vehicle (not shown) according to an embodiment of the present disclosure may include the battery module 10 or the battery pack (not shown) described above. The battery pack (not shown) may include the battery module 10. In addition, the battery module 10 according to an embodiment of the present disclosure may be applied to a vehicle (not shown), for example, a predetermined vehicle (not shown) provided to use electricity such as an electric vehicle or a hybrid vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### INDUSTRIAL APPLICABILITY

The present disclosure relates to a battery module, and a battery pack and a vehicle including the same, and in particular, may be applicable to an industry related to a battery.

## Claims

1. A battery module comprising:
a battery cell stack in which a plurality of battery cells are stacked;
a bus bar to which electrode leads respectively provided in the plurality of battery cells are coupled; and
a cover in which the battery cell stack is accommodated,
wherein the bus bar is provided such that at least a part of the bus bar is in contact with upper surfaces of the electrode leads.

2. The battery module of claim 1, wherein the bus bar comprises:
a first member in contact with side surfaces of the electrode leads; and
a second member in contact with upper surfaces of the electrode leads.

3. The battery module of claim 2,
wherein the first member is disposed between a positive electrode lead and a negative electrode lead, and
wherein the second member extends from the first member toward each of the positive electrode lead and the negative electrode lead.

4. The battery module of claim 3, wherein the bus bar is formed in a "T" shape as a whole.

5. The battery module of claim 4, wherein the second member of the bus bar is bonded by laser welding while being placed on upper portions of the electrode leads.

6. The battery module of claim 5,
wherein the positive electrode lead is manufactured of an aluminum material, and the negative electrode lead is manufactured of a copper material, and
wherein the bus bar is manufactured of an aluminum material, melted during the laser welding, and bonded to an electrode lead of a copper material that is a different material.

7. The battery module of claim 6,
wherein a support frame in which an insertion opening is formed so that the electrode leads protrude is provided on the cover, and
wherein the bus bar is disposed such that a buffer space is formed between the bus bar and the support frame.

8. The battery module of claim 7, wherein the buffer space is formed in a lower side of the bus bar to buffer a tensile force generated in the battery cell.

9. A battery pack, comprising the battery module according to any one of claims 1 to 8.

10. A vehicle, comprising the battery module according to any one of claims 1 to 8.
